# EUROPEAN PATENT SPECIFICATION

(11) **EP 1 848 080 B1**
(45) Date of publication and mention of the grant of the patent: **10.12.2014**
(21) Application number: 07106448.9
(22) Date of filing: 18.04.2007
(51) Int. Cl.: H02G 3/08, H02G 3/12, H02G 3/14

(54) **A sealing device**
Abdichtungsvorrichtung
Dispositif d'obturation

(30) Priority: 20.04.2006 SE 0600891
(43) Date of publication of application: 24.10.2007
(73) Proprietor: Thorsman & Co. AB, 611 29 Nyköping (SE)
(72) Inventor: Wängstre, Håkan, 611 37 Nyköping (SE); Lindqvist, Lars, 611 32 Nyköping (SE)
(74) Representative: Groth & Co. KB

(56) References cited:
- FR-A1- 2 678 118
- US-A1- 2002 084 271

## Description

### Technical field

The present invention relates to a method and to a removable sealing device for preventing the ingress of concrete and concrete water into an installation box that includes a mounting opening in a wall element when embedding the wall element and fastening the installation box against an underlying surface, wherein the sealing device includes a fastening part and a closing part, wherein the fastening part is adapted to enable it to be removably fastened in an opening in said closing part and is intended to seal against the opening in the installation box, and wherein the fastening part includes a permanent magnet which is adapted to enable it to be fastened to a surface of material that is attracted by a magnetic force, so as to hold the installation box fixed to said surface in the embedment process.

### Background of the invention

In the case of electrical installations in buildings, installation boxes are used in the provision of an insulated space for coupling points and for the connection of electric plugs and sockets of different kinds.

When embedding flush-mounted installation boxes in cast concrete walls and ceiling constructions, it is important to ensure that the installation boxes will not move out of position and that some form of sealing device is provided for preventing casting material from penetrating into the box. This is achieved at the present time by fastening the installation boxes to a concrete casting bench in predetermined positions with the aid of rubber-coated magnets. The function of the rubber-coated magnets is partly to prevent ingress of concrete and concrete water into an installation box and partly to fixate the installation boxes against the bench. The surface contour of the rubber-coated magnets used at present corresponds generally to the coupling space of the installation box, and one end part of the magnet includes a flange that seals against the surface of the edge on the installation box that lies in the same plane as the box opening. One drawback with this known rubber-coated magnet is that the seal between the flange and the edge on the installation box is unable to prevent the ingress of concrete material into the coupling space in a satisfactory fashion. The design of the flange creates a significant amount of work in removing concrete rests from the flange and from the edge of the installation box so as to enable the rubber-coated magnets to be re-used. Even small concrete rests on the flange and on the edge of the installation box will result in leakage

Moreover, it is highly desirous that the edge of the installation box and the flange on the surface that lies in abutment with the edge of the box are completely flat in order to obtain a positive seal therebetween. In addition to filling the box and blocking the pipes along which electrical cables are intended to be drawn, the ingress of casting material into the installation box will also result in malfunctioning of the washer-like spacing ring in the installation box. Since these types of rubber-coated magnets are very expensive, it is desirable that they have the longest possible useful life. One serious drawback with the use of the magnets mentioned above to seal against the installation box is that the flange is quickly worn down by the highly aggressive concrete, therewith considerably shortening the life of the magnet. Another drawback with this type of sealing device is that it is not possible to embed installation boxes with preferred electrical facilities, since the rubber-coated magnet, and therewith also sealing of the opening in the installation box, are removed after the embedment process. The high cost of the magnets means that it is inconceivable to allow the magnets to remain in the installation box right up to the building site, with the risk that the magnet will not be returned to its owner for one reason or another.

It is therefore desirable to obtain a sealing device which seals so tightly as to prevent either concrete or concrete water from penetrating in beneath the sealing device and into the coupling space of the installation box when embedding the boxes in wall, ceiling or floor structures, and also a sealing device that will effectively seal the coupling space of the installation box subsequent to its embedment. It is also desirable to obtain a sealing device that does not place excessively high requirements on the accuracy of the users' handling of the box and the magnet in obtaining an effective seal between the installation box and the sealing device. It is also desirable to obtain a sealing device that will remain in position in the installation box during an embedment process. It is also desirable to obtain a sealing device which is located in a region externally of the periphery of the box that is free from casting material.

Leakage into the box also results in a significant amount of work in removing concrete rests from the rubber-coated magnet in order to enable the magnet to be re-used. It is therefore desirable to obtain a sealing device where that part of the device which is intended to seal against the installation box is comprised of a material which is highly resistant to the aggressive concrete, for instance some form of plastic material. It is also desirable to obtain a sealing device with which the magnet can be removed from the installation box for re-use subsequent to embedment of the box, although with the opening of the installation box remaining sealed against dirt and dust until an electrician is ready to carry out electrical installations in the box. Because the opening in the installation box remains sealed even subsequent to the embedment process, it is possible to embed the installation box with preferred electrical facilities. Prior art in the technical field is considered to be the document FR 2678118 disclosing an installation box with a holding device incorporating two magnets

### Object of the invention

The object of the present invention is to provide a method and a sealing device which resolves the problems mentioned above and thus to provide an improved sealing device of the kind described.

### Summary of the invention

This object is achieved by the present invention as defined in the independent claims 1 and 8. Suitable embodiments of the invention are set forth in the dependent claims Thus, in accordance with the present invention, the claims define a removable sealing device which is intended to prevent the ingress of concrete and concrete water into an installation box that has a mounting opening when embedding the installation box in a wall structure, and to fasten the installation box against an underlying surface, wherein the sealing device includes a fastening part and a closing part, wherein the fastening part is adapted to enable it to be fastened removably in an opening in said closure part and is intended to seal against the opening in the installation box, wherein the fastening part includes a permanent magnet which is designed to enable it to be fastened to a material surface that is attracted by a magnetic force so as to hold the installation box firmly against said surface in an embodying process, characterized in that the closure part is cup-shaped and includes a bottom, a side wall and an opening such as to provide protection for the coupling space of the installation box against the ingress of dust and dirt subsequent to an embodying process, and includes a flange which has a first part that extends outwards from the opening and a second part that extends from the first part and rearwards along the outside of the side wall of the installation box such as to achieve sealing abutment between the installation box and the sealing device on the outside of the installation box.

The inventive construction of the sealing device with its sealing abutment with the outside of the installation box is beneficial in providing a positive seal even if the sealing device is not fully connected to the installation box (i.e. to 100 %). Because a positive seal between the sealing device and the installation box can be achieved even when the device is not fitted correctly to the installation box there are no unreasonable requirements that the sealing surfaces must be completely flat, which provides ergonomic benefits from the aspect of manufacture among other things. Moreover, no unreasonable requirements are placed on the accuracy in which the sealing device is fitted by the user to an installation box in order to obtain a good seal therebetween. The provision of a sealing device which will positively prevent the ingress of concrete or concrete water into the coupling space of the installation box and avoid the time consuming work of removing concrete rests from the box and the sealing device. Because the second flange of the sealing device extends along the sidewall of the installation box there is formed a groove in the concrete externally of the periphery of the installation box after having removed the sealing device. The groove formed outside the periphery of the installation box simplifies the work of plastering and painting the wall element and also of turning the screw ring of the installation box by virtue of the fact that the surrounding pressure from the concrete is reduced and thus the pressure against the rotatable ring is also reduced indirectly.

According to one advantageous embodiment of the invention, the permanent magnet may be covered with a rubber layer. This is beneficial with respect to handling of the magnet since the magnet will then run less risk of being damaged in the tough casting environment.

According to one advantageous embodiment, the surface of the permanent magnet that is intended to be fastened against a surface of material that is attracted by a magnet force is generally flat. This results in the advantage of achieving effective fastening of the permanent magnet against the surface on which the magnet is intended to be fixed.

According to another advantageous embodiment, the second part of the flange of the surface facing towards the sidewall of the installation box is provided with an at least partially circumferentially extending collar and that the upper part of the sidewall of the installation box includes a collar so as to enable the closure part of the device to be fastened to the installation box by snapping the closure part onto the box. This results in positive fixation of the closure part to the installation box.

According to one beneficial embodiment of the invention, the sealing device includes a spacing ring or washer that is formed as a separate unit and which is intended to be sealingly fastened at one end to the installation box and the other end of which is adapted to sealingly receive the closure part of the device. Because different reinforcement levels require different total heights of the installation box, it is beneficial to be able to adapt the total height of the box after laying the reinforcement bars. This ring shaped spacing ring is also formed to enable the same closure part to be used even in the absence of the spacing ring is not present. ? The closure part and the spacing ring also enable alternative fastening methods to be used, such as nailing through the bottom of the installation box and nailing externally of the installation box when the box shall be fastened to a wooden surface.

According to one advantageous embodiment, the closure part of the device is generally circular and the second part of the closure part of the device is bevelled in at least two places such as to form straight surfaces directly opposite one another inwardly of the periphery of the circle. When wishing to mutually connect several adjacent installation boxes it is an accepted standard that the centre-to-centre of two mutually adjacent installation boxes will be 71 mm. One advantage afforded by this embodiment is that sealing between the closure part and the installation box can be provided on the outside of the box while enabling the standard centre-two-centre distance between two mutually adjacent installation boxes to be retained.

According to one advantageous embodiment of the invention, the closure part is formed from a plastic material. This provides a closure part that is highly resistant to the aggressive concrete and there is no risk of the closure part being quickly worn out.

Claim 9 defines an inventive method of embodying an installation box that includes a mounting opening in a wall structure with the aid of a removable sealing device which includes a fastening part and a closure part such as to prevent the ingress of concrete and concrete water into the installation box when embedding the box in a wall structure, and fastening said installation box against an underlying surface, characterized by arranging the seal between the connection part and the installation box along the sidewall of the installation box, and by removably fastening the fastening part to the connecting part.

The advantages and benefits explained above are achieved in accordance with the invention.

### Brief description of the drawings

The invention will now be described with reference to exemplifying embodiments thereof and also with reference to the accompanying drawings, in which
Fig. 1 is a perspective view of one embodiment of the inventive sealing device disposed on an installation box;
Fig. 2 is a perspective view of an embodiment of the sealing device according to the present invention provided with a washer-like spacing ring on an installation box;
Fig. 3 illustrates the sealing device of figure 2 with the closure part and the spacing ring shown in section; and
Fig. 4 is a perspective view of one embodiment of the inventive sealing device where the fastening part in the form of a permanent magnet has been separated from the closure part, and where the closure part is illustrated in a sectioned view disposed adjacent the installation box that includes a washer-like spacing ring.

### Detailed description of the invention

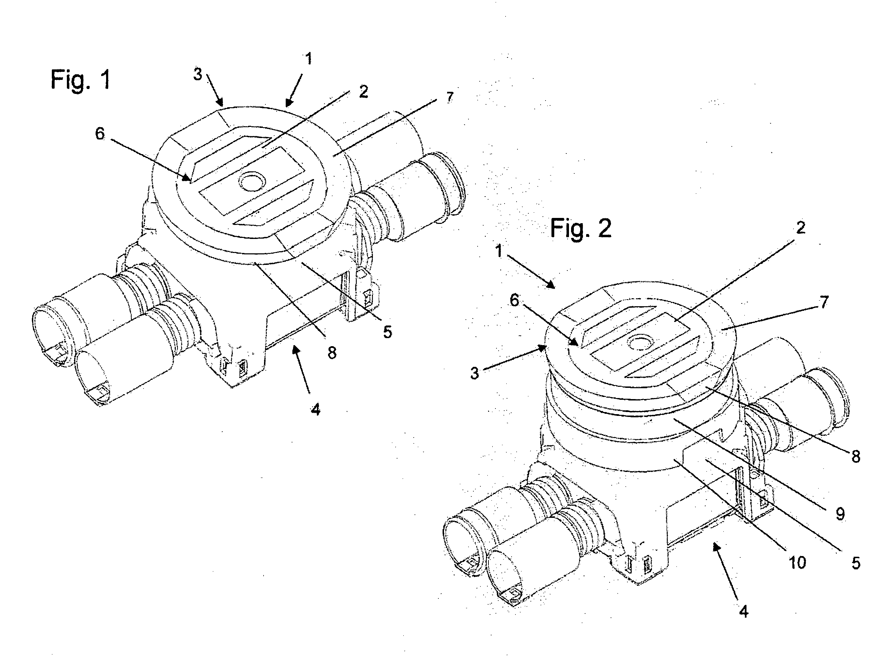

Figures 1-4 illustrate a number of embodiments of the present invention applied to a sealing device intended for embedment in a wall or ceiling structure. It is emphasized that the invention is not limited to this type of sealing device and can be applied to any sealing device whatsoever.

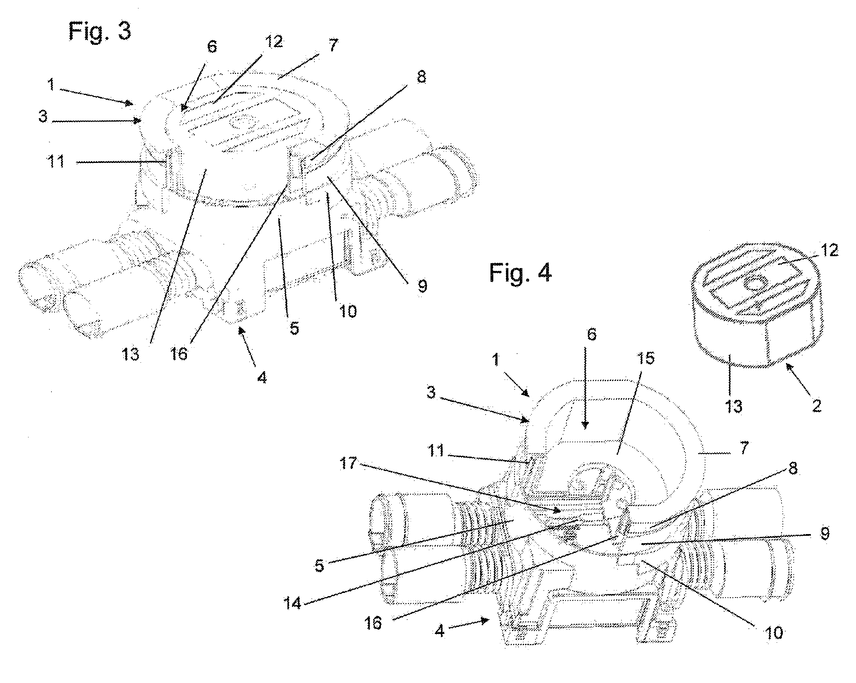

Figure 1 is a perspective view of a sealing device 1 according to one embodiment of the invention. The sealing device 1 shown in figure 1 includes a fastening part 2 and a closure part 3 fitted to an installation box 4. In the case of the illustrated embodiment, the closing part 3 is cup-shaped and has a bottom 15 (see figure 4), a sidewall 16 (see figures 3 and 4) and an opening 6. The opening 6 accommodates the fastening part 2 in the form of a permanent magnet. In order to provide sealing abutment between the installation box 4 and the sealing device 1 on the outside of the installation box 4, the closure part 3 is provided with a flange that has a first part 7 which extends outwards from the opening 6, and a second part 8 which extends out from the first part 7 and rearwardly along the outer side of the side wall 5 of the installation box 4. In order to enable the fastening part 2 to be re-used subsequent to completion of an embedment process, the fastening part 2 is fastened removably to the closure part 3. The ability to remove the fastening part 2 from the closure part 3 also affords the benefit of enabling the closure part 3 to be left in place upon completion of the embedment process and therewith protect the coupling space 14 (see figure 4) of the installation box 4 against the ingress of dust and dirt after the embedment process and enables the embodiment of preferred electrical facilities to be achieved.

Figure 2 illustrates an example of a sealing device that is provided with a ringshaped spacer or washer 9. One end 10 of the ring 9 is removably fastened to the installation box 4 and the other end 11 (see figures 3 and 4) is removably fastened to the closure part 3 of the sealing device 1. The spacing ring 9 is intended to adapt the total height of the installation box 4 in accordance with different reinforcement levels in the embodying process, and also to achieve sealing abutment between the sealing device 1 and the installation box 4. In the case of the illustrated example sealing abutment is achieved at one end 10 of the ring 9 and the installation box 4, and between the other end 11 (see figures 3 and 4) of the ring 9 and the closure part 3 of the sealing device 1.

Figure 3 is a perspective view of the sealing device 1 and illustrates the closure part 3 and the spacing ring 9 in a sectioned view. The sealing device 1 includes a spacing ring 9 whose one end 10 is sealingly fastened to the installation box 4 and whose other end 11 sealingly receives the closure part 3. A fastening part 2 is removably disposed in the opening 6 of the closure part 3. In the case of this example, the fastening part 2 is comprised of a permanent magnet that is covered with a rubber layer 13.

Figure 4 is a perspective view of the sealing device 1 and shows the fastening part 2 separated from the closure part 3 and also shows the connecting part 3 disposed adjacent the installation box 4 with a spacing ring 9. The closure part 3 is also shown in section, therewith enabling the viewer to see down into the coupling space 14 of the installation box 4. The closure part 3 is cup-shaped and includes a bottom 15, a side wall 16 and an opening 6 which accommodates a fastening part 2 in the form of a permanent magnet.

## Claims

1. A removable sealing device (1) intended for the embedment of an installation box (4) that includes a mounting opening (17) in a wall structure, and for fastening said installation box (4) to an underlying surface, wherein the sealing device (1) includes a fastening part (2) and a closure part (3) wherein the fastening part (2) is adapted to enable it to be fastened to said closure part (3) and is intended to seal against the opening (17) in the installation box (4), wherein the fastening part (2) includes a permanent magnet (12) which is adapted so that it can be fastened to a surface comprising material that is attracted by a magnetic force such as to firmly hold the installation box (4) against said surface in an embedment process, **characterized in that** the closure part (3) is cup-shaped and includes a bottom (15), a sidewall (16) and an opening (6), and **in that** the closure part (3) includes a flange that has a first part (7) which extends out from the opening (6) and a second part (8) which extends from the first part (7) and rearwardly along the outside of the side wall (5) of the installation box (4) and **in that** the said fastening part (2) is fastened removably to said closure part (3) in order to be re-used.

2. A removable sealing device according to claim 1, **characterized in that** the permanent magnet (12) is covered with a rubber layer (13).

3. A removable sealing device according to any one of the preceding claims, **characterized in that** the surface of the permanent magnet (12) intended to be fastened to a surface of material that is attracted by a magnet is generally flat.

4. A removable sealing device according to any one of the preceding claims, **characterized in that** the second part (8) of the flange on the surface that faces towards the side wall (5) of the installation box is provided with at least a partially circumferentially extending collar, and **in that** the installation box (4) is provided at an upper part of its side wall (5) with a collar such as to enable the closure part (3) to be snapped onto the installation box (4) in the embedment of the installation box.

5. A removable sealing device according to any one of the preceding claims, **characterized in that** the device includes as a separate element a ringshaped spacing element (9) which is sealingly fastened to the installation box (4) at its one end (10) and is adapted to sealingly receive the closure part (3) at its other end (9).

6. A removable sealing device according to any one of the preceding claims, **characterized in that** the closure part (3) is generally circular and **in that** the second part (8) of the closure part (3) is bevelled on at least two locations such as to provide mutually opposing straight surfaces inwardly of the periphery of the circle.

7. A removable sealing device according to any one of the preceding claims, **characterized in that** the closure part (3) is comprised of a plastic material.

8. A method of preventing the ingress of concrete and concrete water into an installation box (4) that has a mounting opening when embedding the installation box in a wall structure with the aid of a removable sealing device (1) that includes a fastening part (2) and a closure part (3), and fastening said installation box (4) to an underlying surface, **characterized by** providing the seal between the closure part (3) and the installation box (4) along one outside of a side wall of the installation box (4), and removably fastening the fastening part (2) to the closure part (3) in order to be re-used.

## Patentansprüche

1. Entfernbare Abdichtungsvorrichtung (1) zum Einbetten eines Installationskastens (4), der eine Montageöffnung (17) in einer Wandstruktur aufweist, und zum Befestigen des Installationskastens (4) an einer darunter liegenden Oberfläche, wobei die Abdichtungsvorrichtung (1) ein Befestigungsteil (2) und ein Verschlussteil (3) aufweist, wobei das Befestigungsteil (2) dazu ausgelegt ist, an dem Verschlussteil (3) befestigt zu werden und die Öffnung (17) in dem Installationskasten (4) abdichten soll, wobei das Befestigungsteil (2) einen Dauermagneten (12) aufweist, der an einer Oberfläche befestigt werden kann, die Material umfasst, das von einer Magnetkraft angezogen wird, um den Installationskasten (4) fest an der Oberfläche in einem Einbettungsverfahren zu halten, **dadurch gekennzeichnet, dass** das Verschlussteil (3) eine Schalenform und eine Unterseite (15), eine Seitenwand (16) und eine Öffnung (6) aufweist, und dadurch, dass das Verschlussteil (3) einen Flansch, der einen ersten Teil (7) aufweist, der sich aus der Öffnung (6) erstreckt, und einen zweiten Teil (8), der sich von dem ersten Teil (7) erstreckt und nach hinten entlang der Außenseite der Seitenwand (5) des Installationskastens (4) erstreckt, aufweist, und dadurch, dass das Befestigungsteil (2) entfernbar an dem Verschlussteil (3) befestigt ist, um wiederverwendet zu werden.

2. Entfernbare Abdichtungsvorrichtung nach Anspruch 1, **dadurch gekennzeichnet, dass** der Dauermagnet (12) mit einer Gummischicht (13) bedeckt ist.

3. Entfernbare Abdichtungsvorrichtung nach einem der vorhergehenden Ansprüche, **dadurch gekennzeichnet, dass** die Oberfläche des Dauermagneten (12), der an einer Oberfläche des Materials, das von einem Magneten angezogen wird, befestigt werden soll, im Allgemeinen flach ist.

4. Entfernbare Abdichtungsvorrichtung nach einem der vorhergehenden Ansprüche, **dadurch gekennzeichnet, dass** der zweite Teil (8) des Flansches an der Oberfläche, die zu der Seitenwand (5) des Installationskastens weist, mit mindestens einem sich teilweise in Umfangsrichtung erstreckenden Bund bereitgestellt ist, und dadurch, dass der Installationskasten (4) an einem oberen Teil seiner Seitenwand (5) mit einem Bund bereitgestellt ist, damit das Verschlussteil (3) in den Installationskasten (4) beim Einbetten des Installationskastens einschnappen kann.

5. Entfernbare Abdichtungsvorrichtung nach einem der vorhergehenden Ansprüche, **dadurch gekennzeichnet, dass** die Vorrichtung als separates Element ein ringförmiges Abstandselement (9), das abdichtend an dem Installationskasten (4) an seinem einen Ende (10) befestigt ist, aufweist, um das Verschlussteil (3) an seinem anderen Ende (9) abdichtend aufnehmen zu können.

6. Entfernbare Abdichtungsvorrichtung nach einem der vorhergehenden Ansprüche, **dadurch gekennzeichnet, dass** das Verschlussteil (3) im Allgemeinen kreisförmig ist und dadurch, dass der zweite Teil (8) des Verschlussteils (3) an mindestens zwei Stellen abgeschrägt ist, um einander gegenüberliegende gerade Flächen nach innen bezüglich des Umfangs des Kreises bereitzustellen.

7. Entfernbare Abdichtungsvorrichtung nach einem der vorstehenden Ansprüche, **dadurch gekennzeichnet, dass** das Verschlussteil (3) aus einem Kunststoffmaterial besteht.

8. Verfahren zum Verhindern des Eindringens von Beton und betonhaltigem Wasser in einen Installationskasten (4), der eine Montageöffnung beim Einbetten des Installationskastens in einer Wandstruktur mit Hilfe einer entfernbaren Abdichtungsvorrichtung (1) aufweist, die ein Befestigungsteil (2) und ein Verschlussteil (3) aufweist, und Befestigen des Installationskastens (4) an einer darunter liegenden Oberfläche, **gekennzeichnet durch** das Bereitstellen der Abdichtung zwischen dem Verschlussteil (3) und dem Installationskasten (4) entlang einer Außenseite einer Seitenwand des Installationskastens (4), und entfernbares Befestigen des Befestigungsteils (2) an dem Verschlussteil (3) zur Wiederverwendung davon.

## Revendications

1. Dispositif d'obturation (1) amovible servant à l'encastrement d'un boîtier d'installation (4) comprenant une ouverture de montage (17) dans une structure de mur, et à la fixation dudit boîtier d'installation (4) à une surface sous-jacente, le dispositif d'obturation (1) comprenant une partie de fixation (2) et une partie de fermeture (3), la partie de fixation (2) étant conçue pour permettre sa fixation à ladite partie de fermeture (3) et étant destinée à s'appliquer, de façon à assurer un contact d'étanchéité, contre l'ouverture (17) dans le boîtier d'installation (4), la partie de fixation (2) comprenant un aimant permanent (12) qui est conçu pour permettre sa fixation à une surface comprenant un matériau qui est attiré par une force magnétique de façon à maintenir fermement le boîtier d'installation (4) contre ladite surface dans un procédé d'encastrement, **caractérisé en ce que** la partie de fermeture (3) est cupuliforme et comprend un fond (15), une paroi latérale (16) et une ouverture (6), et **en ce que** la partie de fermeture (3) comprend un rebord qui comporte une première partie (7) qui s'étend vers l'extérieur à partir de l'ouverture (6) et une seconde partie (8) qui s'étend à partir de la première partie (7) et vers l'arrière le long de la partie extérieure de la paroi latérale (5) du boîtier d'installation (4) et **en ce que** ladite partie de fixation (2) est fixée de manière amovible à ladite partie de fermeture (3) de façon à pouvoir être réutilisée.

2. Dispositif d'obturation amovible selon la revendication 1, **caractérisé en ce que** l'aimant permanent (12) est recouvert d'une couche de caoutchouc (13).

3. Dispositif d'obturation amovible selon l'une quelconque des revendications précédentes, **caractérisé en ce que** la surface de l'aimant permanent (12) destinée à être fixée à une surface de matériau attiré par un aimant est, dans l'ensemble, plane.

4. Dispositif d'obturation amovible selon l'une quelconque des revendications précédentes, **caractérisé en ce que** la seconde partie (8) du rebord sur la surface qui est orientée vers la paroi latérale (5) du boîtier d'installation est dotée d'une collerette s'étendant sur une partie de la circonférence, et **en ce que** le boîtier d'installation (4) est doté, au niveau d'une partie supérieure de sa paroi latérale (5), d'une collerette de façon à permettre à la partie de fermeture (3) d'être encliquetée sur le boîtier d'installation (4) lors de l'encastrement du boîtier d'installation.

5. Dispositif d'obturation amovible selon l'une quelconque des revendications précédentes, **caractérisé en ce que** le dispositif comprend, sous la forme d'un élément distinct, un élément formant entretoise annulaire (9) qui est fixé, de façon à assurer un contact d'étanchéité, au boîtier d'installation (4) au niveau d'une (10) de ses extrémités et qui est conçu pour recevoir, de façon à assurer un contact d'étanchéité, la partie de fermeture (3), au niveau de son autre extrémité (9).

6. Dispositif d'obturation amovible selon l'une quelconque des revendications précédentes, **caractérisé en ce que** la partie de fermeture (3) est, dans l'ensemble, circulaire et **en ce que** la seconde partie (8) de la partie de fermeture (3) est biseautée à au moins deux endroits de façon à former des surfaces droites mutuellement opposées à l'intérieur de la périphérie du cercle.

7. Dispositif d'obturation amovible selon l'une quelconque des revendications précédentes, **caractérisé en ce que** la partie de fermeture (3) est constituée d'une matière plastique.

8. Procédé de prévention de la pénétration de béton et d'eau de béton dans un boîtier d'installation (4) comportant une ouverture de montage lors de l'encastrement du boîtier d'installation dans une structure de mur au moyen d'un dispositif d'obturation (1) amovible qui comprend une partie de fixation (2) et une partie de fermeture (3) et de la fixation dudit boîtier d'installation (4) à une surface sous-jacente, **caractérisé par** le fait de placer le dispositif d'étanchéité entre la partie de fermeture (3) et le boîtier d'installation (4) le long d'une partie extérieure d'une paroi latérale du boîtier d'installation (4), et le fait de fixer de manière amovible la partie de fixation (2) à la partie de fermeture (3) de façon à ce qu'elle puisse être réutilisée.
